# EUROPEAN PATENT APPLICATION

(11) **EP 4 746 367 A1**
(43) Date of publication of application: **20.05.2026**
(21) Application number: 25212035.7
(22) Date of filing: 29.10.2025
(51) Int. Cl.: H04L 45/00, H04L 41/0894, H04L 45/74, H04L 45/64, H04L 45/745

(54) **HARDWARE RULES PROCESSOR FOR PACKET FILTERING**

(30) Priority: 15.11.2024 US 202418949265
(71) Applicant: Microsoft Technology Licensing, LLC, Redmond, WA 98052-6399 (US)
(72) Inventor: Tan, Tian, Redmond, WA, 98052 (US); Bhanu, Vivek, Redmond, WA, 98052 (US); Ertugay, Osman Nuri, Redmond, WA, 98052 (US); Srinivasan, Harish, Redmond, WA, 98052 (US); Firestone, Daniel Max, Redmond, WA, 98052 (US); Dabagh, Alireza, Redmond, WA, 98052 (US); Libby, Zachary Noel, Redmond, WA, 98052 (US); Ravichandran, Narayanan, Redmond, WA, 98052 (US); Chiou, Derek Tsungkai, Redmond, WA, 98052 (US); Abdelsalam, Ahmed, Redmond, WA, 98052 (US); Garg, Tushar, Redmond, WA, 98052 (US); Swanson, Taylor Catherine, Redmond, WA, 98052 (US); Dasgupta, Milan, Redmond, WA, 98052 (US); Gebara, Nadeen Yassir, Redmond, WA, 98052 (US); Walker, Georgia Olivia, Redmond, WA, 98052 (US); Verma, Anshuman, Redmond, WA, 98052 (US)
(74) Representative: Grünecker Patent- und Rechtsanwälte PartG mbB

(57) **Abstract**

A hardware device is communicatively connected to host servers individually supporting a virtual switch and one or more virtual machines and includes a processor input to receive a header of a data packet in the hardware device, a hardware rules processor scheduler to schedule processing of the header among hardware processing cores in the hardware rules processor, a rules processor core scheduled by the hardware rules processor scheduler to receive the header from the hardware rules processor scheduler, the rules processor core to read compiled networking policies from the memory, and to apply the compiled networking policies to the header to yield a modified header for the data packet, and a connection establishment processor to record the networking connection for the data packet based on the modified header in an established connection datastore.

## Description

### Background

Software-Defined Networking (SDN) can be used as a component of modern data centers to implement fundamental networking functionalities, such as virtual networks and load balancing. SDN typically involves inspecting each packet entering and exiting virtual machines (VMs) and modifying such packets, both inspection and modification being based on a group of policies.

### Summary

In some aspects, the techniques described herein relate to a method of facilitating communication networking by a hardware device in a distributed computing system, the hardware device being communicatively connected to host servers individually supporting a virtual switch and one or more virtual machines, the method including: receiving a header of a data packet to a hardware rules processor in the hardware device, based on determination that a networking connection for the data packet had not yet been established in the distributed computing system, wherein the data packet includes a payload and the header with header fields; scheduling, by the hardware rules processor, processing of the header among hardware processing cores in the hardware rules processor, wherein the header is passed to an available thread of an available one of the hardware processing cores; reading, by a hardware processing core receiving the header, compiled networking policies from a memory, based on receipt of the header; applying, by the hardware rules processor, the compiled networking policies to the header to yield a modified header for the data packet by matching one or more of the header fields to a match condition and executing a corresponding action of the compiled networking policies to generate the modified header; and recording, by the hardware rules processor, the networking connection for the data packet based on the modified header in an established connection datastore.

In some aspects, the techniques described herein relate to a hardware rules processor for facilitating communication networking in a distributed computing system, the hardware rules processor being configured to communicatively connect to host servers individually supporting a virtual switch and one or more virtual machines, the hardware rules processor including: processor input configured to receive a header of a data packet, based on determination that a networking connection for the data packet had not yet been established in the distributed computing system, wherein the data packet includes a payload and the header with header fields; a hardware rules processor scheduler configured to schedule processing of the header among hardware rules processing cores in the hardware rules processor; a hardware rules processor core in the hardware rules processor, scheduled by the hardware rules processor scheduler to receive the header from the hardware rules processor scheduler, the hardware rules processor core being configured to read compiled networking policies from a memory, based on receipt of the header, and to apply the compiled networking policies to the header to yield a modified header for the data packet; and a connection establishment processor in the hardware rules processor and configured to record the networking connection for the data packet based on the modified header in an established connection datastore.

In some aspects, the techniques described herein relate to a hardware device for facilitating communication networking in a distributed computing system, the hardware device being configured to communicatively connect to host servers individually supporting a virtual switch and one or more virtual machines, the hardware device including: a memory; and a hardware rules processor including a processor input configured to receive a header of a data packet in the hardware device, based on determination that a networking connection for the data packet had not yet been established in the distributed computing system, wherein the data packet includes a payload and the header with header fields, a hardware rules processor scheduler configured to schedule processing of the header among hardware processing cores in the hardware rules processor, a rules processor core scheduled by the hardware rules processor scheduler to receive the header from the hardware rules processor scheduler, the rules processor core being configured to read compiled networking policies from the memory, based on receipt of the header, and to apply the compiled networking policies to the header to yield a modified header for the data packet by matching one or more of the header fields to a match condition and executing a corresponding action of the compiled networking policies to generate the modified header, and a connection establishment processor configured to record the networking connection for the data packet based on the modified header in an established connection datastore.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates an example networking environment including multiple hardware rules processors for traffic flow control.
FIG. 2 illustrates a TOR switch and a node using implementations of a hardware RP (see, e.g., an RP and an RP).
FIG. 3 illustrates a physical NIC including an example hardware rules processor (RP).
FIG. 4 illustrates an example RP.
FIG. 5 illustrates example operations for a method of facilitating communication networking by a hardware device in a distributed computing system.
FIG. 6 illustrates an example computing device for use in implementing the described technology.

### Detailed Descriptions

The rise of public cloud services, such as Amazon Web Services^{®}, Microsoft Azure^{®}, and Google Cloud Platform^{®}, has created large scales of data center computing. Data centers providing public cloud services regularly involve server counts in the millions. Cloud service providers not only provide scale, high density, and high performance of virtual machines (VMs) to customers but also rich network semantics, such as private virtual networks with customer-supplied address spaces, scalable load balancers, security groups and Access Control Lists (ACLs), virtual routing tables, bandwidth metering, Quality of Service (QoS), etc.

Traditional core routers and hardware may not be economically implemented at scale to provide levels of network performance needed for large-scale data centers. Instead, an alternative approach is to implement network policies in software on VM hosts and in virtual switches that connect VMs to a physical computer network. As this implementation separates a centralized control plane from a data plane on a host, such a technique can be considered an example of Software-Defined Networking ("SDN") and, in particular, host-based SDN.

Several implementations of the disclosed technology are directed to a programmable virtual filtering platform for virtual switches in an SDN environment. The virtual filtering platform implements a programming model in the host servers that not only allows distinct networking controllers (e.g., SDN controllers) to independently create and define policies and actions but also enforce layering and boundaries between the defined policies and actions. As such, new networking controllers can be developed to add functionality to virtual switches without impacting policies created by existing networking controllers and vice versa.

In certain implementations, the programming model can include policies and actions in the form of Match Action Tables ("MATs") that are organized as multiple network filter objects in a hierarchy. Networking controllers can independently create, program, and/or update the network filter objects according to target SDN policies and actions. Examples of such network filter objects can include port, layer, group, and/or rule objects in a top-to-bottom hierarchical order. The virtual switch can utilize each of the foregoing network filter objects when processing incoming and outgoing packets, as described in more detail below. In other examples, the network filter objects can be organized as a single sequence, multiple sequences, or in other suitable manners.

In certain implementations, port objects can be basic units of network filtering policies. Each port object can correspond to a virtual port in a virtual switch. A virtual port is a virtualization of a physical network adapter (referred to as a vNIC) inside a virtual machine and is identified by a MAC (media access controller) address assigned to that vNIC. The term "vport" is typically used to refer to a top-level network filtering object to distinguish it from a TCP "port." Each port object can include multiple MATs based on which the virtual switch can act as one or more network filters on an inbound path or an outbound path of a corresponding virtual port. Typically, networking controllers can program network policies on behalf of a virtual machine or virtual network interface card ("VNIC"). As such, the separation of the port objects can allow the networking controllers to independently manage SDN policies on various virtual machines. In other implementations, port objects can be replaced by virtual network objects, tenant site objects, or other suitable types of objects.

Policies included in a port object can be further divided into multiple-layer objects arranged in a sequential manner. Layer objects can each include one or more MATs that networking controllers can use to specify network filtering policies. Different networking controllers can separately create, update, or otherwise manage each of the layer objects, or one networking controller can create several layer objects. Each layer object can contain a MAT with inbound and outbound rules (as contained in rule objects) reflecting corresponding policies that can filter and modify incoming and outgoing packets. Logically, packets go through each layer object one by one to match rules in each based on a state of the individual packets after one or more actions performed in a previous layer object. Networking controllers can specify a sequence of the multiple layer objects for a virtual port or port object with respect to one another and create, modify, and/or remove layer objects dynamically during operation.

Rule objects can include entries of a MAT. Each entry (or "rule") can define conditions and apply corresponding actions on matching packets. Rule objects can allow a networking controller to be expressive while minimizing fixed policies in a data plane. In certain embodiments, rules can include a match condition list coupled with an action. The condition list can include one or more conditions, each condition individually including a rule type (e.g., source IP address) and a list of one or more matching values (e.g., an IP address, a range of IP addresses, a prefix of IP addresses, etc.). The matching values can thus be a singleton, range, or prefix. For a condition to match a data packet, any of the matching values can match, as in an OR clause. For a rule object to match, all conditions in the rule match, as in a Boolean AND clause. The action can contain an action type (e.g., packet encapsulation) and a data structure specific to that action type with corresponding data to perform the action (e.g., encapsulation header values). For example, an encapsulation rule can include an action of packet encapsulation that uses input data of source/destination IP addresses, source/destination media access control ("MAC") addresses, an encapsulation format, and/or key in encapsulating a packet that matches the list of conditions of the rule object.

In some implementations, rule objects in a layer object can be logically organized into one or more groups represented by group objects for management purposes, such as transactional updates. For example, rule objects related to virtual network operations, network name translations, or access control list operations can be grouped into separate group objects that correspond to MATs. When classifying packets, all group objects in a layer object can be iterated to locate, for instance, a single rule (e.g., a highest priority rule) in each group that matches the packet. In certain embodiments, a rule object matched by a last group can be selected. In other embodiments, a rule object can also be marked "terminating" to indicate that if a packet matches the rule object, the action of the rule object would be applied immediately without traversing additional groups. Group objects can also have conditions similar to rule objects. For instance, if a packet does not match a condition associated with a group object, the group object and associated rule objects contained therein can be skipped when iterating through all the group objects. In other embodiments, the group objects may be omitted, and a layer object can include multiple rules of different types.

In at least one implementation, a match-action instruction set architecture (ISA) is employed for networking applications having one or more of the following characteristics:
1. Unique match instructions, including one or more of the following:
   a. Built-in mask and/or shift before match, which reduces instruction counts compared to other implementations
   b. Program control based on match results, including return from a call and/or jump
      forward, which reduces instruction counts compared to other implementations
   c. Multi-level condition register, which allows building logic expressions during processing
2. An efficient hash computation instruction
3. A non-load-store instruction set - An instruction set in which the instruction and data parameters are the same word. As such, there is no need for memory instructions, and read data is embedded into instruction. Accordingly, this approach removes a need for a data cache and an access interface and further reduces cache misses.

Some implementations also include a register file designed for efficient processing, which includes one or more of the following:
1. Built-in semantics for network tuples - Compared to general purpose registers, register in a regfile map to network packet semantics, which improves performance over other implementations.
2. One or more unique control registers to select networking headers that facilitate code reuse across encapsulations, thereby providing the flexibility to have lightweight pointer behavior through the regfile without the overhead of pointers.

One or more implementations may also include networking optimized in-line processing core for evaluating software defined networking policies, including, without limitation, one or more of the following characteristics:
1. Threads are allocated per-packet
2. Threads are freed up when packet processing is complete
3. No overheads for context switching
4. No polling or interruptions during thread execution
5. A two-level cache hierarchy with read-only support

Packets may be scheduled across different cores to minimize performance imbalances across the cores. Register files may be pre-populated before a thread begins executing a program on the allocated packet.

In operation, when a packet is received at the virtual switch, the virtual switch can iterate through all the rules in all group objects in each layer to match the packet. The virtual switch can then perform the action associated with the matching rule on the packet before iterating all the rules in all group objects in the next layer object. In one example, the virtual switch can iterate through layer objects containing policies related to virtual network operations (e.g., converting between a virtual network address and a physical network address), network address translations (e.g., translation between a virtual IP address and a direct IP address), access control list operations (e.g., determining whether access rights are allowed, denied, or audited), and metering operations (e.g., packet buffering and QoS control) in sequence. In other examples, the virtual switch can filter the received packets based on priority or other suitable criteria.

By enforcing layering of the layer objects with associated group and/or rule objects, the virtual switch can process all the network filtering policies developed and created by independent networking controllers. For example, a first networking controller can develop and create a first layer object related to operations of virtual network operations, while a second networking controller can develop and create a second layer object related to network address translations. By separating such filtering policies into independent layer objects, policies related to each layer object can be managed independently without affecting operations of the other layer object. For instance, the first networking controller can update the first layer object with new policies related to operations of virtual network operations without affecting operations of the second layer object because filtering of any incoming and outgoing packets is performed in an accumulative fashion. As such, several embodiments of the disclosed technology can have great flexibility in allowing independent development of network filtering policies without affecting enforcement of other policies by the virtual switch.

Processing a packet according to layers in sequence can involve parsing the packet, modifying the packet according to a selected rule, and forwarding the modified packet to the next layer for a repeat of similar operations. While the packet parsing and modifying are relatively linear operations, matching the packet to a specific rule can be quite expensive from a processing perspective. For example, a rule specifying "if an IP address of the packet falls into one of 10,000 IP address ranges, then perform a specific action," then a lot of processing power may be consumed to determine whether the rule is a match. Furthermore, networking policies may include a large number of such rules. Accordingly, such repeated software processing can reduce packet processing performance as packets traverse each software layer in turn to match rules. Thus, as the number of layers, groups, and rules increase, packet processing at software-based virtual switches can become a bottleneck for virtual machine performance, especially when individual hosts continue to host increasing numbers of virtual machines.

Furthermore, implementing such matching algorithms in hardware would traditionally be a difficult and potentially unworkable challenge. However, the described technology employs a multiple core/multiple thread-based design that achieves workable performance gains, moving the matching algorithm out of the virtual switch and into a physical NIC or a hardware switch, avoiding operating system latencies, queuing latencies, data copying latencies, and lock latencies with multiple processor core threads access the same MAT. Furthermore, in some implementations, dedicating one processor core thread per packet and freeing up the processor core thread when the matching processing is complete, the hardware-implemented matching avoids expensive context switching that reduces the performance of software-based match processing.

In this context, network administrators typically apply such policies (e.g., security, isolation, and other policies) to the network traffic via one or more networking controllers. An example policy may allow or prevent communications between a traffic source (e.g., a specific user's laptop) and a traffic destination (e.g., a virtual machine) in a data center network. In some implementations, such policies are defined by a set of rules as entries in a MAT, which are specified via a networking controller in a software-defined networking (SDN) environment to control traffic through multiple components in the network. Accordingly, in such an environment, a network administrator can manage the traffic within the network via a centralized console for one or more networking controllers rather than logging into individual switches to configure their traffic control.

For example, after a data packet from the traffic source enters a gateway at the boundary of a physical network, the data packet is forwarded within a physical network of top-of-rack (TOR). Each TOR switch interfaces between the physical data center network and a data center node that includes one or more physical NICs and one or more host server devices. Each host server device executes one or more virtual switches and one or more virtual machines that provide the functionality of the target cloud service. Each physical NIC routes data traffic to and from various servers and virtual machines in the rack based on rule-based policy records in an MAT, and these rule-based policy records can be predefined via the networking controller.

Example policy records in a MAT may include, without limitation, match fields and corresponding actions. As used herein, a Match Action Table ("MAT") generally refers to a data structure having multiple entries in a table format. Each of the entries can include one or more match conditions and a corresponding action. The match conditions can be configured by a networking controller (e.g., an SDN controller) for matching a set of header fields of a packet. The action can also be configured by the networking controller to apply an operation to the packet when the conditions match the set of header fields of the packet.

Example match conditions and actions for a rule object suitable for a virtual switch are shown in Tables 1 and 2 below, although additional and alternative conditions and actions may be employed. In certain implementations, a rule object can be an entity that performs actions on matching packets in a MAT model. When creating a rule object or rule, a network controller can be expressive while reducing fixed policies in a data plane.

**Table 1 - Example Match Conditions**

| Match Conditions |
|---|
| Source/Dest MAC Address |
| Source/Dest IP Address |
| Source/Dest Port |
| Protocol (e.g., TCP/UDP) |
| Generic Routing Encapsulation (GRE) Key |
| VXLAN Network Identifier |
| VLAN Identifier |
| Metadata From Previous Layer |

**Table 2 - Example Actions**

| Actions |
|---|
| Allow/Block (Stateful/Stateless) |
| NAT (L3/l4) |
| Encapsulation/Decapsulation |
| QoS - Rate Limit, Mark Differentiated Services Code Point, Meter |
| Encrypt/Decrypt |
| Stateful Tunneling |
| Equal-Cost Multi-Path Routing |

A description of an example match-action instruction is provided below:
- Match Conditions: Source MAC: 11-22-33-44-55-66, Dest MAC: 77-88-99-AA-BB-CC, Source IP: 1.2.3.4, Dest IP: 5.6.7.8, Source Port: 1234, Dest Port: 5678
- Action: Allow, NAT, Modify Source IP: 11.22.33.44, Modify Dest IP: 55.66.77.88

As used herein, an established connection or "flow" generally refers to a stream of packets received/transmitted via a single network connection between two endpoints (e.g., servers, virtual machines, or applications executed in the virtual machines) as identified by, for example, an IP address and a TCP port number.

An example flow is denoted below:
OUT TCP:00-22-48-77-88-99=>12-34-56-78-9A-BC;10.0.0.4:51172=>168.68.68.68: 32526, Flow Action: Eth:Modify(SMAC:00-22-48-77-88-99,DMAC:04-27-28-0F-0E-0C) IP:Modify(SIP:169.254.10.1,DIP:10.50.150.150), DSCP: 0 Transport:Ignore MSSDelta:20

Virtual filtering platform (VFP) software, typically executing on a host server at the data center node, can inspect each data packet received from a traffic source, attempting to match data in the packet header (e.g., input port number, source address, destination address) against one or more match conditions of the MAT. If a match is found, the routing software then executes the corresponding action to establish a connection between the traffic source indicated in the data packet header and the traffic destination indicated in the data packet header, to drop the packet, to add headers to the packet, to modify the packet, etc., according to the action corresponding to the matched condition. However, inspecting packets and executing action at least in part by VFP software executing on a host server device introduces application and operating system latencies and uses memory and compute cycles of the computing device.

In contrast, the described technology moves some of the VFP implementation (e.g., inspection, rule matching, action execution) to a hardware rules processor (e.g., a rules processor or RP) that resides in a physical NIC or the top-of-rack switch of an individual node in the data center while still relying on the networking controller to specify, manage, and distribute the rules. The networking controller distributes initial and updated rules to individual hardware rules processors at the nodes, which apply the policies and establish connections when appropriate. By implementing the processing of rules in hardware, the described technology avoids the application and operating system latencies and reduces undesirable resource utilization in the general-purpose computer. In this manner, the network administrator can still centrally manage the establishment of connections, but the application of the policies and execution of the actions are distributed to and executed by the physical NICs positioned at individual nodes of the data center.

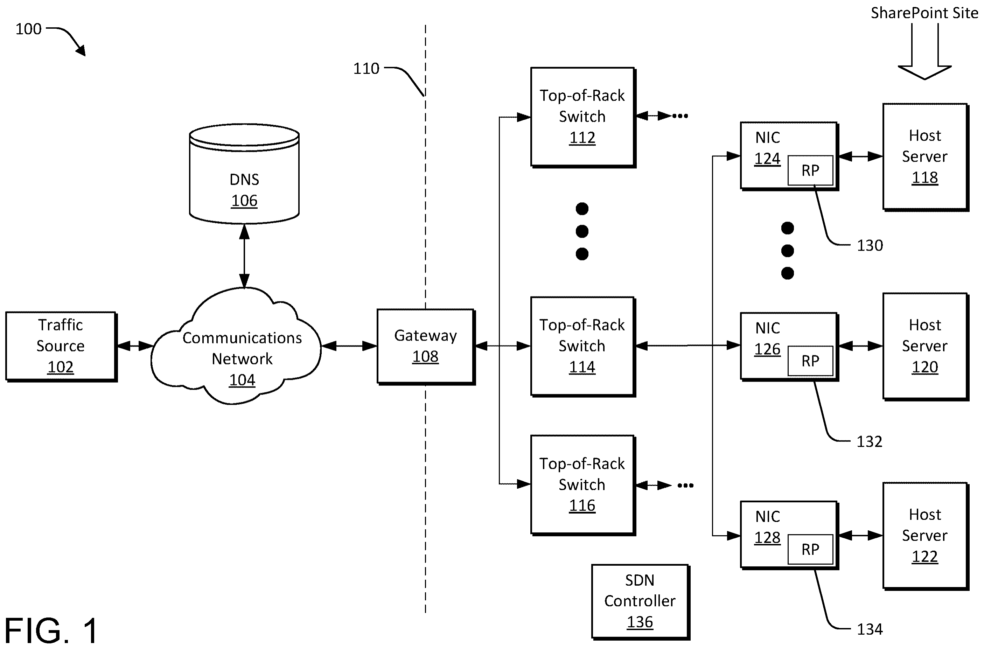

FIG. 1 illustrates an example networking environment 100 including multiple hardware rules processors for traffic flow control. In one scenario, a traffic source 102 performs a query across a communication network 104 (e.g., the Internet) to a DNS
server 106 (Domain Name System) for the IP address of a traffic destination within a data center. For example, the traffic source 102 may be a client computer of a user attempting to access his company's SharePoint site implemented within the data center.

The DNS server 106 returns via the communication network 104 a virtual IP address (a VIP address) of the SharePoint site to the traffic source 102, and the traffic source 102 uses the VIP address as a destination address of a data packet it sends across the communication network 104 to the SharePoint site. Based on the VIP address, the networking components of the communication network 104 route the data packet to a gateway 108 (e.g., including, without limitation, switching hardware, router hardware, and/or firewall hardware) at the boundary of the data center implementing the SharePoint site.

The physical network 110 typically includes multiple top-of-rack (TOR) switches (see, e.g., TOR switch 112, TOR switch 114, and TOR switch 116). Each TOR switch supports a node of host servers (see, e.g., host server 118, host server 120, and host server 122) running one or more virtual machines. Each TOR switch connects to its host servers via physical NICs (network interface controllers; see, e.g., NIC 124, NIC 126, and NIC 128). Accordingly, the gateway 108 routes the data packet to a TOR switch 114, for example, for routing to one appropriate node, host server, and/or virtual machine executing on a host server implementing the SharePoint site, for example.

One or more software-defined networking controllers (see, e.g., an SDN controller 136) in the physical network 110 manage flow control for improved network management and application performance. The SDN controller 136 typically provides networking rules (e.g., SDN policies in the form of MATs or other formats) to direct the forwarding of data packets within the physical network 110. When a data packet from a traffic source and directed to a traffic destination within the physical network 110 is received by a node, a virtual filtering platform (VFP) in the node applies the networking rules (e.g., provided by the SDN controller 136) to determine how to handle this data packet. If a connection (e.g., a flow specified in a generic flow table or GFT) is already established matching the unique source and destination L2/L3/L4 tuple, potentially across multiple layers of encapsulation, along with a header transposition action specifying how header fields are to be added/removed/changed, then the data packet is forwarded according to that established connection.

However, if a connection is not already established for this data packet, then the VFP relies on a hardware rules processor or RP (e.g., residing in a top-of-rack switch or on a physical NIC) to process SDN rules (e.g., specified in a MAT) for this first data packet in the flow using a just-in-time flow action compiler and to create (1) stateful exact-match rules for each established connection (e.g., each TCP/UDP flow) and (2) corresponding actions encompassing the programmed policies for that flow (e.g., recorded in the GFT). The new rule/policy information is stored by the RP (see, e.g., RP 130, RP 132, and RP 134) into the GFT as a newly established connection. It should be understood that SDN rules and flows can be applied to unidirectional and/or bidirectional traffic flows.

The described technology is directed to hardware processing of the SDN policies relied on to establish the connection in the GFT. In FIG. 1, each NIC includes a hardware RP, although this hardware can alternatively be implemented within a top-of-rack switch or other connected hardware device. Each RP implements the functionality of classification and filtering based on a set of SDN rules provided by the SDN controller 136 and can handle various types of network traffic, including without limitation one or more of IPv4, TCP, UDP, and ICMP packets. The RP can also perform actions such as dropping, forwarding, modifying, or logging the packets in accordance with the rules.

In the described technology, some or all of the rule-based processing for establishing connections need not be handled in the software stack of the host servers and is instead delegated to a hardware component in a physical NIC and/or a TOR switch, thereby improving performance and resource utilization over a software approach executing in a host server. In one implementation, the hardware RP is implemented in an FPGA (Field Programmable Gate Array), although other implementations, including without limitation ASICs (Application Specific Integrated Circuits) and SOCs (Systems on a Chip), may be employed.

A technical benefit of using the hardware RP over software processing in a host server is that it can reduce the CPU load and latency for network applications. By performing packet classification and filtering in the hardware-implemented rules RP, the VFP operations can avoid the overhead of context switching, memory copying, and system calls that are involved in software processing in the host server. Implementations of the hardware RP can also operate at line speed, which means that it can process packets as fast as they arrive on the network interface without otherwise typical bottlenecks or queueing delays. This faster processing can improve the throughput and responsiveness of the physical network 110, especially for high-volume or time-sensitive traffic.

Furthermore, implementations of the hardware RP can provide more flexibility and scalability for network rule management, as it can support a large number of rules with various fields and actions and dynamically update the rules without interrupting the network traffic or affecting the performance. Implementations of the hardware RP can also support multiple network interfaces and protocols, which can simplify the network configuration and increase the compatibility with different devices and applications. Therefore, the hardware RP can offer significant technical benefits over software processing for network rule processing.

In summary, a hardware RP enables fast and efficient SDN rule processing. The RP differs from alternative solutions, such as software processing or network processors, in several aspects. First, the hardware RP is designed to operate at the lowest level of the network stack, which means that it can intercept and process packets before they reach the operating system or the application layer. This can avoid the overhead and latency that are introduced by software processing, as well as the complexity and limitations of network processors. Second, the hardware RP is based on a reconfigurable architecture that can support a wide range of network protocols and rule types. The hardware RP can dynamically adapt to different network scenarios and requirements without compromising the performance or functionality. Third, the hardware RP is integrated with a dedicated memory and a rule management unit, which can store and update a large number of rules efficiently. The hardware RP can also leverage hardware parallelism and pipelining to achieve high throughput and low latency for packet processing.

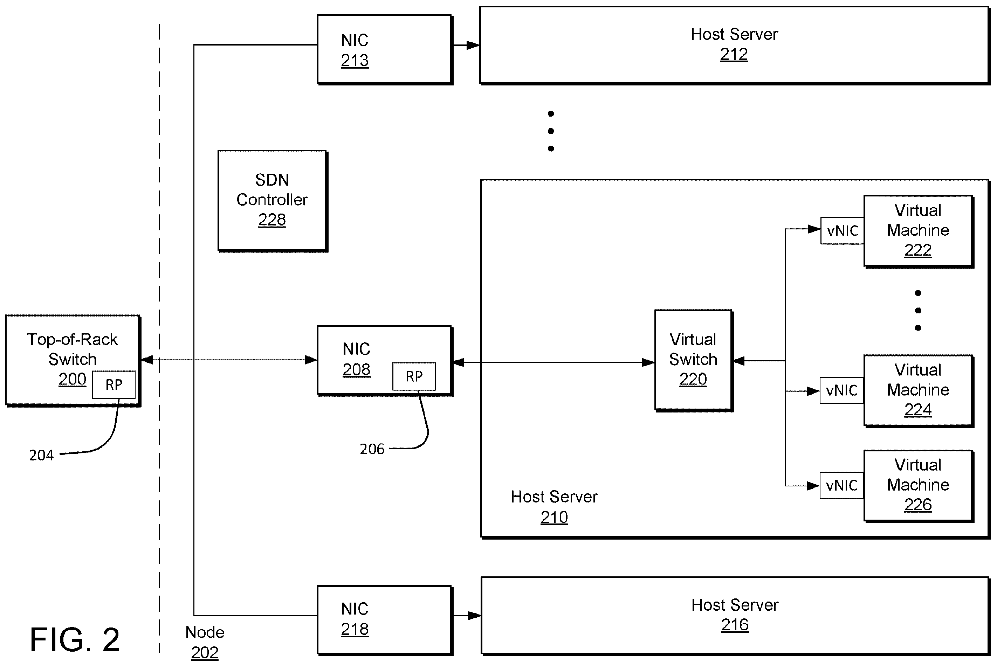

FIG. 2 illustrates a TOR switch 200 and a node 202 using implementations of a hardware RP (see, e.g., an RP 204 and an RP 206). The RP 204 is physically assembled into the TOR switch 200, and the RP 206 is physically assembled into the NIC 208 (a physical NIC). Generally, when a data packet is forwarded to a host server 210, it is received by a virtual switch 220, which forwards the data packet to the appropriate virtual machine (see, e.g., virtual machine 222, virtual machine 224, and virtual machine 226) via a corresponding virtual NIC (vNIC). When a data packet is forwarded from the host server 210, the virtual switch forwards it to the NIC 208, which forwards the data packet to the appropriate destination. The networking policies applied by the RPs are set by an SDN controller 228 and stored in a memory of the RP.

More specifically, when a data packet is received (in either direction) at the TOR switch 200 or the NIC 208, the corresponding circuitry determines whether a connection has already been established for this data packet (e.g., based on the packet header information, such as source and destination address, and entries in a GFT). If so, that circuitry forwards the data packet toward the appropriate destination, either inside the node 202 or outside the node 202. If a connection has not already been established, the hardware RP applies the current SDN policies to process the data packet by establishing a new connection between the traffic source indicated in the data packet header and the traffic destination indicated in the data packet header, dropping the packet, adding headers to the packet, modifying the packet, etc., without relying on virtual switch software executing in a host server 210.

It is noted that the TOR switch 200 is also connected to a host server 212 via a NIC 213 and to a host server 216 via a NIC 218. The NIC 213 and the NIC 218 do not include hardware RPs, so the RP 204 in the TOR switch 200 can process the data traffic with the host server 212 and the host server 216, applying the SDN rules, establishing connections, etc. These configurations (e.g., RP in TOR switch or RP in NIC) may be employed individually or in combination.

Turning back to the RP 206 in the NIC 208, as an example, the packet header of each data packet flowing through the NIC 208 is examined by the NIC 208 to forward it through an already-established connection or to apply SDN rules using the RP 206 to establish a new connection, drop the packet, add headers to the packet, modify the packet, etc., without relying on virtual switch software executing in a host server 210.

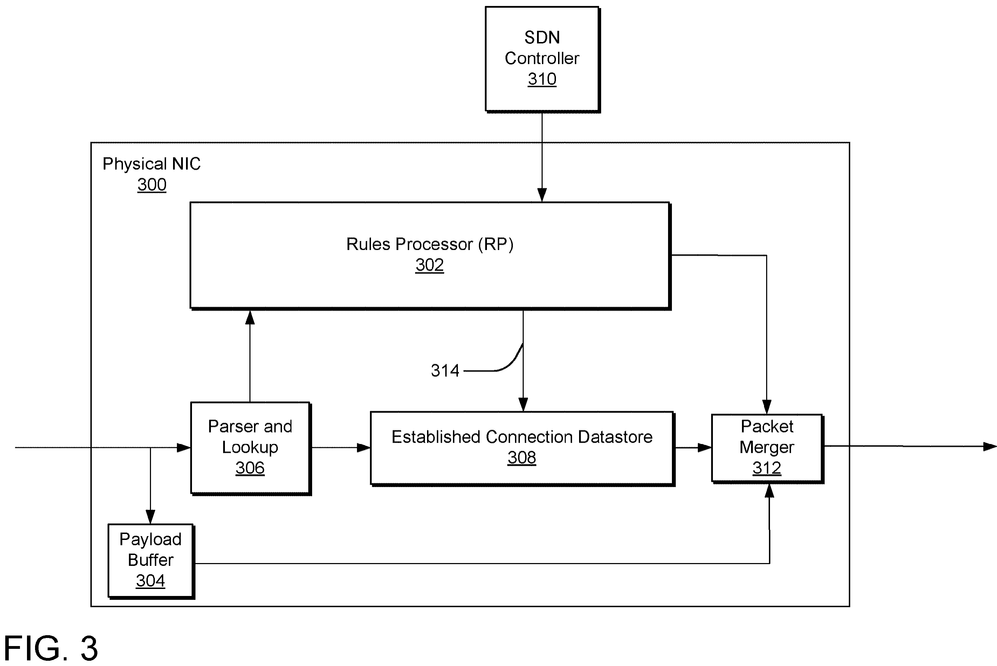

FIG. 3 illustrates a physical NIC 300 including an example hardware rules processor (RP 302). It should be understood that a similar implementation may be employed to place the RP in a TOR switch.

For the purpose of this discussion, a data packet includes a packet header, which may contain controller information (e.g., addressing, routing, protocol version) and a payload, which includes the substantive data content of the data packet. When a data packet is received by the physical NIC 300, the payload is split off and stored into a payload buffer 304, and the packet header is forwarded to a parser and lookup processor 306, which parses the packet header contents (e.g., addresses, ports) and examines a GFT of established connections (e.g., via a lookup operation) to determine whether a connection has already been established for this data packet. If so, the packet header is processed according to the networking policies provided by the SDN controller 310 and specified in the GFT already recorded for the corresponding established connection. The established connection datastore 308 stores connection parameters based on a modified packet header for this connection and modifies the packet header according to these connection parameters (e.g., according to a corresponding entry in the GFT). The packet merger 312 recombines the modified packet header with the payload at a packet merger 312 before being forwarded to the appropriate destination, which may be performed by the packet merger 312 or another routing component of the physical NIC, switch, or hardware device.

If a connection is not already established for this data packet, the parser and lookup processor 306 sends the packet header to the RP 302, which applies the networking policies to the data header to establish a new connection (illustrated by arrow 314), if permitted by the policies. For the purposes of executing the RP 302, the SDN controller 310 has compiled the networking policies as programmed instructions and stored them in a memory of the RP 302. If networking policies change, the SDN controller 310 will compile the updated networking policies and replace the old networking policies in the memory of the RP 302 with the updated policies. The RP 302 accesses the compiled networking policies in the memory to process each data header it receives from the parser and lookup processor 306. Assuming the established connection is permitted, the RP 302 applies the networking policies to modify the packet header and determine the connection parameters.

In one implementation, the connection parameters are developed by the RP 302 from the header and the modified header. The RP 302 determines the differences between the header and the modified header, and the differences are referred to as delta fields. The delta fields are then recorded in (e.g., written in) the established connection datastore 308 in association with this type of data packet. For this data packet, the modified packet header is also forwarded to the packet merger 312, recombined with the payload, and the resulting recombined data packet is forwarded to its destination with its modified header.

For future data packets matching this established connection, the established connection datastore 308 may be a network-optimized datastore. The established connection datastore 308 may also include memory and/or other circuitry that are external to the ROP 302 (e.g., as shown in FIG. 3) and may contain connection parameters for millions of flows or more. The established connection datastore 308 applies the matched connection parameters (e.g., the differences between the original packet header and the modified packet header) to the packet header to generate a modified packet header, which is combined with the payload and forwarded to its destination.

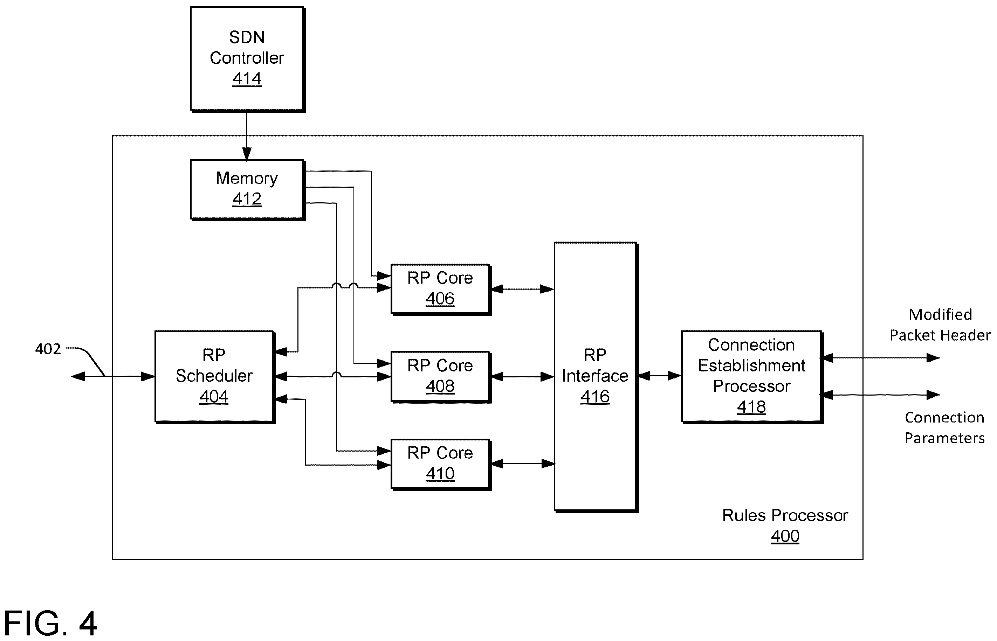

FIG. 4 illustrates an example RP 400. The RP 400 is hardware RP that is implemented in an FPGA (Field Programmable Gate Array), although other implementations, including without limitation ASICs (Application Specific Integrated Circuits) and SOCs (Systems on a Chip), may be employed. A processor input 402 receives a data header from a parser and lookup processor (see, e.g., the parser and lookup processor 306 in FIG. 3) when an established connection for this data packet is not already set in the GFT (e.g., the established connection datastore). An RP scheduler 404 receives the packet header from the processor input 402 and determines the RP core (see, e.g., RP core 406, RP core 408, RP core 410, although a greater or lesser number of RP cores may be employed) to which it will send the packet header for processing. Each RP core may include multiple processing threads. Accordingly, the RP scheduler 404 holds the patent header in a queue until a thread becomes available on one of the RP cores, at which point, the RP scheduler 404 sends the packet header to that thread in that RP core. Furthermore, the RP scheduler 404 may re-format the packet header to facilitate processing by the RP core.

The packet header is then sent to the scheduled RP core. In one implementation, two copies of the packet header are received into special-purpose registers in the RP core. When the packet header copies are received by the scheduled RP core into the special-purpose registers, the RP core accesses the memory 412 (e.g., an L2 cache) to read a compiled program of instructions implementing the network policies, which is provided by an SDN controller 414 (e.g., positioned outside the RP 400, the NIC and/or TOR switch). The compiled program may be updated at appropriate times by the SDN controller 414 by replacing the compiled program in the memory 412 with a compiled program representing instructions for the updated networking policies. In this manner, the RP can be kept updated as changes to the network and associated applications occur. In some implementations, the compiled program is initially compiled into an external memory (e.g., DDR memory) and transferred to an L2 cache (e.g., the memory 412) in the hardware device (e.g., the physical NIC or hardware switch).

After reading the instructions from the memory 412, the RP core matches the packet header with corresponding match conditions within these instructions. For example, the RP core executes the instructions, attempting to match the source address, the destination address, and the port in the packet header with one or more corresponding match conditions within the compiled instructions and then applies the corresponding action(s) to that header (e.g., modifying one or more fields in the packet header) on one of the copies of the packet header. One or more of the compiled instructions (e.g., the last instruction) executed by the RP core on the packet header trigger the RP core to send both copies of the packet header (e.g., the original version and the modified version) through an RP interface 416 to a connection establishment processor 418, which examines the two copies of the packet header to create a flow that represents a newly established connection (e.g., an entry in the GFT) for this resulting packet header. In one implementation, this examination results in a determination of the differences (e.g., "deltas") between the original and modified versions of the packet header, which are deemed connection parameters. The connection parameters are sent to the established connection datastore as an entry (e.g., the in GFT) for this data packet to allow efficient modification of the packet headers of future data packets like this data packet.

Furthermore, for this data packet, the modified packet header is output to a packet merger to be combined with the payload, and the newly combined packet is forwarded to the destination in accordance with the modified packet header. After the connection has been established, subsequent data packets matching the established connection (e.g., sharing common header fields with the first data packet upon which the connection is established) need not be sent to the hardware rules processor. Instead, the established connection for the subsequent packets is looked up in the established connection datastore, and their headers are modified according to the connection parameters associated with the established connection and then forwarded to the corresponding destination.

As previously described, the various implementations of RIP 400 can support a match-action instruction set architecture (ISA) that is employed for networking applications having one or more of the following characteristics:
1. Unique match instructions, including one or more of the following:
   a. Built-in mask and/or shift before match, which reduces instruction counts compared to other implementations
   b. Program control based on match results, including return from a call and/or jump
      forward, which reduces instruction counts compared to other implementations
   c. Multi-level condition register, which allows building logic expressions during processing
2. An efficient hash computation instruction
3. A non-load-store instruction set - An instruction set in which the instruction and data parameters are the same word. As such, there is no need for memory instructions, and read data is embedded into instruction. Accordingly, this approach removes a need for a data cache and an access interface and further reduces cache misses.

Some implementations also include a register file designed for efficient processing, which includes one or more of the following:
1. Built-in semantics for network tuples - Compared to general purpose registers, register in a regfile map to network packet semantics, which improves performance over other implementations.
2. One or more unique control registers to select networking headers that facilitate code reuse across encapsulations, thereby providing the flexibility to have lightweight pointer behavior through the regfile without the overhead of pointers.

One or more implementations may also include networking optimized in-line processing core for evaluating software defined networking policies, including, without limitation, one or more of the following characteristics:
1. Threads are allocated per-packet
2. Threads are freed up when packet processing is complete
3. No overheads for context switching
4. No polling or interruptions during thread execution
5. A two-level cache hierarchy with read-only support

Packets may be scheduled across different cores to minimize performance imbalances across the cores. Register files may be pre-populated before a thread begins executing a program on the allocated packet.

In summary, a packet header is received at the processor input 402, and the RP scheduler 404 schedules the packet header for processing by an available thread of one of the RP cores. When the RP core receives the packet header, it reads the compiled match-action instructions from the memory 412 and executes the match-action instructions on the packet header to identify the match conditions matched by the packet header and to perform the corresponding action on the packet header. The original packet header and the modified packet header (on which one or more actions have been performed) are passed through the RP interface 416 to a connection establishment processor 418, which examines the two copies of the packet header to create a flow that represents a newly established connection for this packet header. In one implementation, the deltas between the two copies are recorded as connection parameters, which are sent to the established connection datastore as a flow entry for this data packet to allow efficient modification of the packet headers of future data packets like this data packet. When a flow is established for a packet header, subsequent packets for this flow can skip the rules processor, relying on the connection parameters in the established connection datastore to forward the packet to its destination.

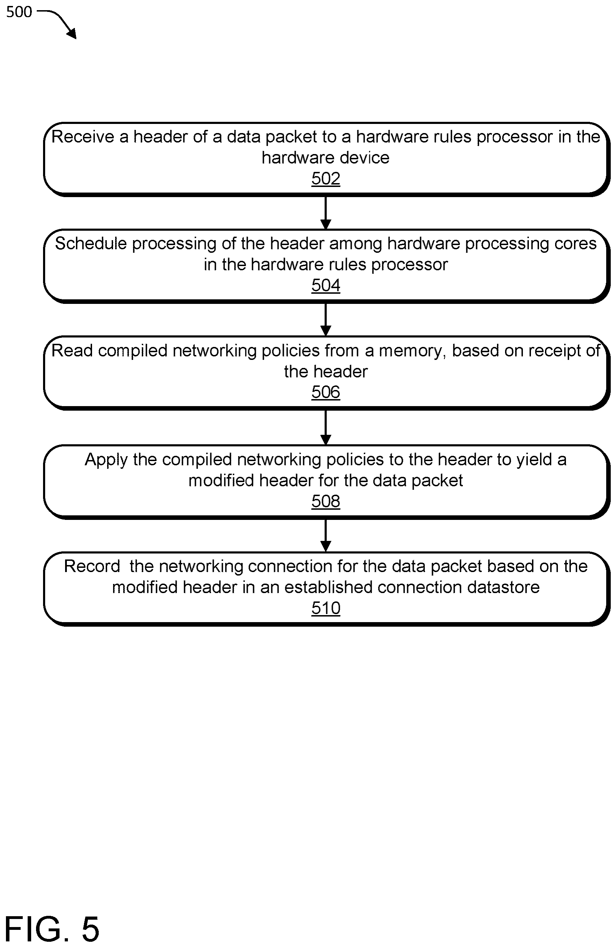

FIG. 5 illustrates example operations 500 for a method of facilitating communication networking by a hardware device in a distributed computing system. The hardware device is communicatively connected to host servers, each host server individually supporting a virtual switch and one or more virtual machines. A receiving operation 502 receives a header of a data packet to a hardware rules processor in the hardware device based on determination that a networking connection for the data packet had not yet been established in the distributed computing system. The data packet includes a payload and the header with header fields.

A scheduling operation 504 schedules, by the hardware rules processor, processing of the header among hardware processing cores in the hardware rules processor, wherein the header is passed to an available thread of an available one of the hardware processing cores. An input operation 506 reads, by a hardware processing core receiving the header, compiled networking policies from a memory based on receipt of the header.

A modification operation 508 applies, by the hardware rules processor, the compiled networking policies to the header to yield a modified header for the data packet by matching one or more of the header fields to a match condition and executing a corresponding action of the compiled networking policies to generate the modified header. A connection establishment operation 510 writes, by the hardware rules processor, the networking connection for the data packet based on the modified header in an established connection datastore.

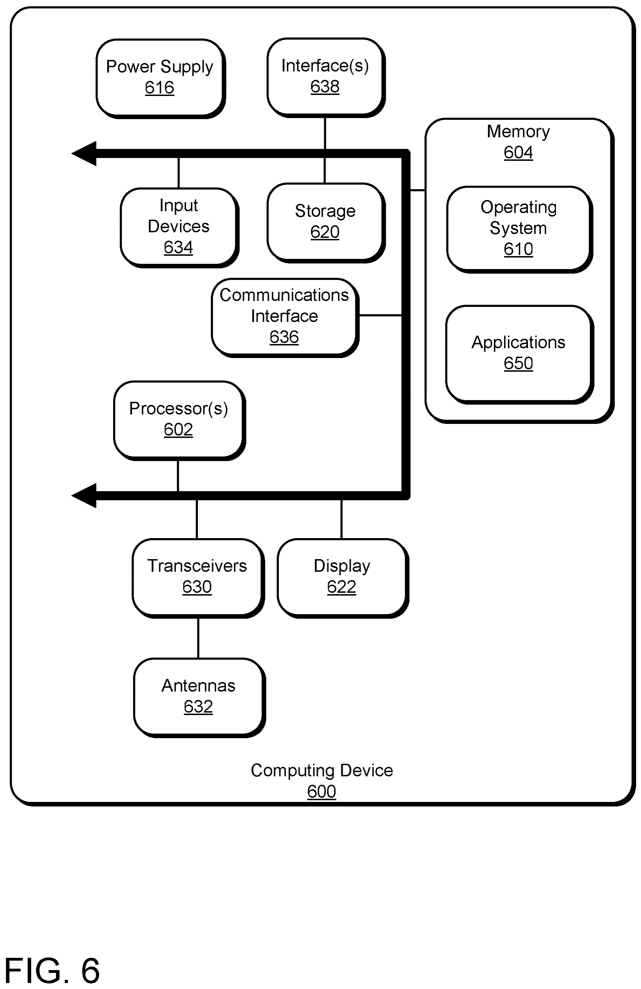

FIG. 6 illustrates an example computing device 600 for use in implementing the described technology. The computing device 600 may be a client computing device (such as a laptop computer, a desktop computer, or a tablet computer), a host server/cloud computing device, an Internet-of-Things (IoT), any other type of computing device, or a combination of these options. The computing device 600 includes one or more hardware processor(s) 602 and a memory 604. The memory 604 generally includes both volatile memory (e.g., RAM) and nonvolatile memory (e.g., flash memory), although one or the other type of memory may be omitted. An operating system 610 resides in the memory 604 and is executed by the processor(s) 602. In some implementations, the computing device 600 includes and/or is communicatively coupled to storage 620.

In the example computing device 600, as shown in FIG. 6, one or more software modules, segments, and/or processors, such as applications 650, match-action instructions, network controller code, and other program code and modules are loaded into the operating system 610 on the memory 604 and/or the storage 620 and executed by the processor(s) 602. The storage 620 may store networking policies, connection parameters, compiled match-action instructions, and other data and be local to the computing device 600 or may be remote and communicatively connected to the computing device 600.

The computing device 600 includes a power supply 616, which may include or be connected to one or more batteries or other power sources and which provides power to other components of the computing device 600. The power supply 616 may also be connected to an external power source that overrides or recharges the built-in batteries or other power sources.

The computing device 600 may include one or more communication transceivers 630, which may be connected to one or more antenna(s) 632 to provide network connectivity (e.g., mobile phone network, Wi-Fi^{®}, Bluetooth^{®}) to one or more other servers, client devices, IoT devices, and other computing and communications devices. The computing device 600 may further include a communications interface 636 (such as a network adapter or an I/O port, which are types of communication devices). The computing device 600 may use the adapter and any other types of communication devices for establishing connections over a wide-area network (WAN) or local-area network (LAN). It should be appreciated that the network connections shown are exemplary and that other communications devices and means for establishing a communications link between the computing device 600 and other devices may be used.

The computing device 600 may include one or more input devices 634 such that a user may enter commands and information (e.g., a keyboard, trackpad, or mouse). These and other input devices may be coupled to the server by one or more interfaces 638, such as a serial port interface, parallel port, or universal serial bus (USB). The computing device 600 may further include a display 622, such as a touchscreen display.

The computing device 600 may include a variety of tangible processor-readable storage media and intangible processor-readable communication signals. Tangible processor-readable storage can be embodied by any available media that can be accessed by the computing device 600 and can include both volatile and nonvolatile storage media and removable and non-removable storage media. Tangible processor-readable storage media excludes intangible and transitory communications signals (such as intangible signals per se) and includes volatile and nonvolatile, removable and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 600. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

In addition, a hardware RP implements certain hardware/software components of virtual switching technology (e.g., a virtual filtering platform) in accordance with embodiments of the described technology. Such components may include hardware circuitry, such as an FPGA or other programmable circuitry. A person of ordinary skill in the art would recognize that hardware may be considered fossilized software, and software may be considered liquefied hardware. As just one example, software instructions in a component may be burned to a Programmable Logic Array circuit or may be designed as a hardware circuit with appropriate integrated circuits. Equally, hardware may be emulated by software. Various implementations of source, intermediate, and/or object code and associated data may be stored in a computer memory that includes read-only memory, random-access memory, magnetic disk storage media, optical storage media, flash memory devices, and/or other suitable computer-readable storage media excluding propagated signals.

Clause 1. A method of facilitating communication networking by a hardware device in a distributed computing system, the hardware device being communicatively connected to host servers individually supporting a virtual switch and one or more virtual machines, the method comprising: receiving a header of a data packet to a hardware rules processor in the hardware device, based on determination that a networking connection for the data packet had not yet been established in the distributed computing system, wherein the data packet includes a payload and the header with header fields; scheduling, by the hardware rules processor, processing of the header among hardware processing cores in the hardware rules processor, wherein the header is passed to an available thread of an available one of the hardware processing cores; reading, by a hardware processing core receiving the header, compiled networking policies from a memory, based on receipt of the header; applying, by the hardware rules processor, the compiled networking policies to the header to yield a modified header for the data packet by matching one or more of the header fields to a match condition and executing a corresponding action of the compiled networking policies to generate the modified header; and recording, by the hardware rules processor, the networking connection for the data packet based on the modified header in an established connection datastore.

Clause 2. The method of clause 1, wherein the compiled networking policies are provided by a software-defined networking controller external to the hardware device and include match conditions and corresponding actions.

Clause 3. The method of clause 1, wherein recording the networking connection for the data packet comprises: determining one or more differences between the modified header and the header to yield one or more delta fields; and writing the one or more delta fields to the established connection datastore to establish the networking connection for the data packet.

Clause 4. The method of clause 1, wherein recording the networking connection for the data packet comprises: writing connection parameters to the established connection datastore to establish the networking connection for the data packet, wherein the established connection datastore resides in circuitry in the hardware device.

Clause 5. The method of clause 1, further comprising: combining the modified header with the payload of the data packet to yield a modified data packet; and forwarding the modified data packet in accordance with the modified header.

Clause 6. The method of clause 1, wherein the data packet is a first data packet and further comprising: forwarding a modified version of the first data packet in accordance with the networking connection recorded in the established connection datastore.

Clause 7. The method of clause 1, wherein the data packet is a first data packet and further comprising: receiving, by the hardware device, a second data packet after the first data packet, wherein the second data packet has a second header sharing common header fields with the header of the first data packet; determining, by the hardware device, that the networking connection for the first data packet and the second data packet have been established in the distributed computing system, wherein the networking connection is recorded in the established connection datastore of the hardware device; and forwarding the second data packet in accordance with the networking connection recorded in the established connection datastore of the hardware device.

Clause 8. A hardware rules processor for facilitating communication networking in a distributed computing system, the hardware rules processor being configured to communicatively connect to host servers individually supporting a virtual switch and one or more virtual machines, the hardware rules processor comprising: processor input configured to receive a header of a data packet, based on determination that a networking connection for the data packet had not yet been established in the distributed computing system, wherein the data packet includes a payload and the header with header fields; a hardware rules processor scheduler configured to schedule processing of the header among hardware rules processing cores in the hardware rules processor; a hardware rules processor core in the hardware rules processor, scheduled by the hardware rules processor scheduler to receive the header from the hardware rules processor scheduler, the hardware rules processor core being configured to read compiled networking policies from a memory, based on receipt of the header, and to apply the compiled networking policies to the header to yield a modified header for the data packet; and a connection establishment processor in the hardware rules processor and configured to record the networking connection for the data packet based on the modified header in an established connection datastore.

Clause 9. The hardware rules processor of clause 8, wherein the compiled networking policies are provided by a software-defined networking controller external to the hardware rules processor and include match conditions and corresponding actions.

Clause 10. The hardware rules processor of clause 8, wherein the connection establishment processor is further configured to record the networking connection for the data packet by determining one or more differences between the modified header and the header to yield one or more delta fields and writing the one or more delta fields to the established connection datastore to establish the networking connection for the data packet.

Clause 11. The hardware rules processor of clause 8, wherein the connection establishment processor is further configured to record the networking connection for the data packet by writing connection parameters to the established connection datastore to establish the networking connection for the data packet.

Clause 12. The hardware rules processor of clause 8, wherein the connection establishment processor is configured to receive the modified header and the header from the hardware rules processor core.

Clause 13. A hardware device for facilitating communication networking in a distributed computing system, the hardware device being configured to communicatively connect to host servers individually supporting a virtual switch and one or more virtual machines, the hardware device comprising: a memory; and a hardware rules processor including a processor input configured to receive a header of a data packet in the hardware device, based on determination that a networking connection for the data packet had not yet been established in the distributed computing system, wherein the data packet includes a payload and the header with header fields, a hardware rules processor scheduler configured to schedule processing of the header among hardware processing cores in the hardware rules processor, a rules processor core scheduled by the hardware rules processor scheduler to receive the header from the hardware rules processor scheduler, the rules processor core being configured to read compiled networking policies from the memory, based on receipt of the header, and to apply the compiled networking policies to the header to yield a modified header for the data packet by matching one or more of the header fields to a match condition and executing a corresponding action of the compiled networking policies to generate the modified header, and a connection establishment processor configured to record the networking connection for the data packet based on the modified header in an established connection datastore.

Clause 14. The hardware device of clause 13, wherein the compiled networking policies are provided by a software-defined networking controller external to the hardware device and include match conditions and corresponding actions.

Clause 15. The hardware device of clause 13, wherein the connection establishment processor is further configured to determine one or more differences between the modified header and the header to yield one or more delta fields and to write the one or more delta fields to the established connection datastore to establish the networking connection for the data packet.

Clause 16. The hardware device of clause 13, wherein the connection establishment processor is further configured to write connection parameters to the established connection datastore to establish the networking connection for the data packet, wherein the established connection datastore resides in circuitry in the hardware device.

Clause 17. The hardware device of clause 13, further comprising: packet merger circuitry configured to combine the modified header with the payload of the data packet to yield a modified data packet and to forward the modified data packet in accordance with the modified header.

Clause 18. The hardware device of clause 13, wherein the data packet is a first data packet and further comprising: packet merger circuitry configured to combine the modified header with the payload of the data packet to yield a modified data packet and to forward a modified version of the first data packet in accordance with the networking connection recorded in the established connection datastore.

Clause 19. The hardware device of clause 13, wherein the data packet is a first data packet and, based on receipt of a second data packet after the first data packet, the second data packet including a second header sharing common header fields with the header of the first data packet, and further comprising: a parser and lookup processor configured to determine that the networking connection for the first data packet and the second data packet have been established in the distributed computing system, wherein the networking connection is recorded in the established connection datastore of the hardware device; and a packet merger configured to forward the second data packet in accordance with the networking connection recording the established connection datastore of the hardware device.

Clause 20. The hardware device of clause 13, wherein the connection establishment processor is configured to receive the modified header and the header from the rules processor core.

Clause 21. A system for facilitating communication networking by a hardware device in a distributed computing system, the hardware device being communicatively connected to host servers individually supporting a virtual switch and one or more virtual machines, the system comprising: means for receiving a header of a data packet to a hardware rules processor in the hardware device, based on determination that a networking connection for the data packet had not yet been established in the distributed computing system, wherein the data packet includes a payload and the header with header fields; means for scheduling, by the hardware rules processor, processing of the header among hardware processing cores in the hardware rules processor, wherein the header is passed to an available thread of an available one of the hardware processing cores; means for reading, by a hardware processing core receiving the header, compiled networking policies from a memory, based on receipt of the header; means for applying, by the hardware rules processor, the compiled networking policies to the header to yield a modified header for the data packet by matching one or more of the header fields to a match condition and executing a corresponding action of the compiled networking policies to generate the modified header; and means for recording, by the hardware rules processor, the networking connection for the data packet based on the modified header in an established connection datastore.

Clause 22. The system of clause 21, wherein the compiled networking policies are provided by a software-defined networking controller external to the hardware device and include match conditions and corresponding actions.

Clause 23. The system of clause 21, wherein the means for recording the networking connection for the data packet comprises: means for determining one or more differences between the modified header and the header to yield one or more delta fields; and means for writing the one or more delta fields to the established connection datastore to establish the networking connection for the data packet.

Clause 24. The system of clause 21, wherein the means for recording the networking connection for the data packet comprises: means for writing connection parameters to the established connection datastore to establish the networking connection for the data packet, wherein the established connection datastore resides in circuitry in the hardware device.

Clause 25. The system of clause 21, further comprising: means for combining the modified header with the payload of the data packet to yield a modified data packet; and means for forwarding the modified data packet in accordance with the modified header.

Clause 26. The system of clause 21, wherein the data packet is a first data packet and further comprising: means for forwarding a modified version of the first data packet in accordance with the networking connection recorded in the established connection datastore.

Clause 27. The system of clause 21, wherein the data packet is a first data packet and further comprising: means for receiving, by the hardware device, a second data packet after the first data packet, wherein the second data packet has a second header sharing common header fields with the header of the first data packet; means for determining, by the hardware device, that the networking connection for the first data packet and the second data packet have been established in the distributed computing system, wherein the networking connection is recorded in the established connection datastore of the hardware device; and forwarding the second data packet in accordance with the networking connection recorded in the established connection datastore of the hardware device.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.
**The following is a list of further preferred embodiments of the invention:**
Embodiment 1. A method (500) of facilitating communication networking by a hardware device in a distributed computing system, the hardware device being communicatively connected to host servers individually supporting a virtual switch (220) and one or more virtual machines, the method comprising:
   receiving (502) a header of a data packet to a hardware rules processor (302) in the hardware device, based on determination that a networking connection for the data packet had not yet been established in the distributed computing system, wherein the data packet includes a payload and the header with header fields;
   scheduling (504), by the hardware rules processor (302), processing of the header among hardware processing cores in the hardware rules processor(302), wherein the header is passed to an available thread of an available one of the hardware processing cores;
   reading (506), by a hardware processing core receiving the header, compiled networking policies from a memory (604) (412), based on receipt of the header;
   applying (508), by the hardware rules processor (302), the compiled networking policies to the header to yield a modified header for the data packet by matching one or more of the header fields to a match condition and executing a corresponding action of the compiled networking policies to generate the modified header; and
   recording (510), by the hardware rules processor (302), the networking connection for the data packet based on the modified header in an established connection datastore (308).
Embodiment 2. The method of embodiment 1, wherein the compiled networking policies are provided by a software-defined networking controller external to the hardware device and include match conditions and corresponding actions.
Embodiment 3. The method of embodiment 1, wherein recording the networking connection for the data packet comprises:
   determining one or more differences between the modified header and the header to yield one or more delta fields; and
   writing the one or more delta fields to the established connection datastore to establish the networking connection for the data packet.
Embodiment 4. The method of embodiment 1, wherein recording the networking connection for the data packet comprises:
   writing connection parameters to the established connection datastore to establish the networking connection for the data packet, wherein the established connection datastore resides in circuitry in the hardware device.
Embodiment 5. The method of embodiment 1, further comprising:
   combining the modified header with the payload of the data packet to yield a modified data packet; and
   forwarding the modified data packet in accordance with the modified header.
Embodiment 6. The method of embodiment 1, wherein the data packet is a first data packet and further comprising:
   forwarding a modified version of the first data packet in accordance with the networking connection recorded in the established connection datastore.
Embodiment 7. The method of embodiment 1, wherein the data packet is a first data packet and further comprising:
   receiving, by the hardware device, a second data packet after the first data packet, wherein the second data packet has a second header sharing common header fields with the header of the first data packet;
   determining, by the hardware device, that the networking connection for the first data packet and the second data packet have been established in the distributed computing system, wherein the networking connection is recorded in the established connection datastore of the hardware device; and
   forwarding the second data packet in accordance with the networking connection recorded in the established connection datastore of the hardware device.
Embodiment 8. A hardware rules processor (302) for facilitating communication networking in a distributed computing system, the hardware rules processor (302) being configured to communicatively connect to host servers individually supporting a virtual switch (220) and one or more virtual machines, the hardware rules processor (302) comprising:
   processor input (402) configured to receive (502) a header of a data packet, based on determination that a networking connection for the data packet had not yet been established in the distributed computing system, wherein the data packet includes a payload and the header with header fields;
   a hardware rules processor scheduler (404) configured to schedule (504) processing of the header among hardware rules processing cores (406, 408, 410) in the hardware rules processor (302);
   a hardware rules processor core (406, 408, 410) in the hardware rules processor (302), scheduled by the hardware rules processor scheduler (404) to receive the header from the hardware rules processor scheduler (404), the hardware rules processor core (406, 408, 410) being configured to read (506) compiled networking policies from a memory (604) (412), based on receipt of the header, and to apply (508) the compiled networking policies to the header to yield a modified header for the data packet; and
   a connection establishment processor (418) in the hardware rules processor (302) and configured to record (510) the networking connection for the data packet based on the modified header in an established connection datastore (308).
Embodiment 9. The hardware rules processor of embodiment 8, wherein the compiled networking policies are provided by a software-defined networking controller external to the hardware rules processor and include match conditions and corresponding actions.
Embodiment 10. The hardware rules processor of embodiment 8, wherein the connection establishment processor is further configured to record the networking connection for the data packet by determining one or more differences between the modified header and the header to yield one or more delta fields and writing the one or more delta fields to the established connection datastore to establish the networking connection for the data packet.
Embodiment 11. The hardware rules processor of embodiment 8, wherein the connection establishment processor is further configured to record the networking connection for the data packet by writing connection parameters to the established connection datastore to establish the networking connection for the data packet.
Embodiment 12. The hardware rules processor of embodiment 8, wherein the connection establishment processor is configured to receive the modified header and the header from the hardware rules processor core.
Embodiment 13. A hardware device (300) for facilitating communication networking in a distributed computing system, the hardware device (300) being configured to communicatively connect to host servers individually supporting a virtual switch (220) and one or more virtual machines, the hardware device (300) comprising:
   a memory (604) (412); and
   a hardware rules processor (302) including a processor input (402) configured to receive (502) a header of a data packet in the hardware device, based on determination that a networking connection for the data packet had not yet been established in the distributed computing system, wherein the data packet includes a payload and the header with header fields, a hardware rules processor scheduler (404) configured to schedule (504) processing of the header among hardware processing cores (406, 408, 410) in the hardware rules processor (302), a rules processor core scheduled by the hardware rules processor scheduler (404) to receive the header from the hardware rules processor scheduler (404), the rules processor core being configured to read (506) compiled networking policies from the memory (604) (412), based on receipt of the header, and to apply (508) the compiled networking policies to the header to yield a modified header for the data packet by matching one or more of the header fields to a match condition and executing a corresponding action of the compiled networking policies to generate the modified header, and a connection establishment processor (418) configured to record (510) the networking connection for the data packet based on the modified header in an established connection datastore (308).
Embodiment 14. The hardware device of embodiment 13, wherein the compiled networking policies are provided by a software-defined networking controller external to the hardware device and include match conditions and corresponding actions.
Embodiment 15. The hardware device of embodiment 13, wherein the connection establishment processor is further configured to determine one or more differences between the modified header and the header to yield one or more delta fields and to write the one or more delta fields to the established connection datastore to establish the networking connection for the data packet.
Embodiment 16. The hardware device of embodiment 13, wherein the connection establishment processor is further configured to write connection parameters to the established connection datastore to establish the networking connection for the data packet, wherein the established connection datastore resides in circuitry in the hardware device.
Embodiment 17. The hardware device of embodiment 13, further comprising:
   packet merger circuitry configured to combine the modified header with the payload of the data packet to yield a modified data packet and to forward the modified data packet in accordance with the modified header.
Embodiment 18. The hardware device of embodiment 13, wherein the data packet is a first data packet and further comprising:
   packet merger circuitry configured to combine the modified header with the payload of the data packet to yield a modified data packet and to forward a modified version of the first data packet in accordance with the networking connection recorded in the established connection datastore.
Embodiment 19. The hardware device of embodiment 13, wherein the data packet is a first data packet and, based on receipt of a second data packet after the first data packet, the second data packet including a second header sharing common header fields with the header of the first data packet, and further comprising:
   a parser and lookup processor configured to determine that the networking connection for the first data packet and the second data packet have been established in the distributed computing system, wherein the networking connection is recorded in the established connection datastore of the hardware device; and
   a packet merger configured to forward the second data packet in accordance with the networking connection recording the established connection datastore of the hardware device.
Embodiment 20. The hardware device of embodiment 13, wherein the connection establishment processor is configured to receive the modified header and the header from the rules processor core.

## Claims

1. A method (500) of facilitating communication networking by a hardware device in a distributed computing system, the hardware device being communicatively connected to host servers individually supporting a virtual switch (220) and one or more virtual machines, the method comprising:
receiving (502) a header of a data packet to a hardware rules processor (302) in the hardware device, based on determination that a networking connection for the data packet had not yet been established in the distributed computing system, wherein the data packet includes a payload and the header with header fields;
scheduling (504), by the hardware rules processor (302), processing of the header among hardware processing cores in the hardware rules processor(302), wherein the header is passed to an available thread of an available one of the hardware processing cores;
reading (506), by a hardware processing core receiving the header, compiled networking policies from a memory (604) (412), based on receipt of the header;
applying (508), by the hardware rules processor (302), the compiled networking policies to the header to yield a modified header for the data packet by matching one or more of the header fields to a match condition and executing a corresponding action of the compiled networking policies to generate the modified header; and
recording (510), by the hardware rules processor (302), the networking connection for the data packet based on the modified header in an established connection datastore (308).

2. The method of claim 1, wherein the compiled networking policies are provided by a software-defined networking controller external to the hardware device and include match conditions and corresponding actions.

3. The method of one of claims 1 to 2, wherein recording the networking connection for the data packet comprises:
determining one or more differences between the modified header and the header to yield one or more delta fields; and
writing the one or more delta fields to the established connection datastore to establish the networking connection for the data packet.

4. The method of one of claims 1 to 3, wherein recording the networking connection for the data packet comprises:
writing connection parameters to the established connection datastore to establish the networking connection for the data packet, wherein the established connection datastore resides in circuitry in the hardware device.

5. The method of one of claims 1 to 4, further comprising:
combining the modified header with the payload of the data packet to yield a modified data packet; and
forwarding the modified data packet in accordance with the modified header.

6. The method of claim 1, wherein the data packet is a first data packet and further comprising:
forwarding a modified version of the first data packet in accordance with the networking connection recorded in the established connection datastore.

7. The method of one of claims 1 to 6, wherein the data packet is a first data packet and further comprising:
receiving, by the hardware device, a second data packet after the first data packet, wherein the second data packet has a second header sharing common header fields with the header of the first data packet;
determining, by the hardware device, that the networking connection for the first data packet and the second data packet have been established in the distributed computing system, wherein the networking connection is recorded in the established connection datastore of the hardware device; and
forwarding the second data packet in accordance with the networking connection recorded in the established connection datastore of the hardware device.

8. A hardware rules processor (302) for facilitating communication networking in a distributed computing system, the hardware rules processor (302) being configured to communicatively connect to host servers individually supporting a virtual switch (220) and one or more virtual machines, the hardware rules processor (302) comprising:
processor input (402) configured to receive (502) a header of a data packet, based on determination that a networking connection for the data packet had not yet been established in the distributed computing system, wherein the data packet includes a payload and the header with header fields;
a hardware rules processor scheduler (404) configured to schedule (504) processing of the header among hardware rules processing cores (406, 408, 410) in the hardware rules processor (302);
a hardware rules processor core (406, 408, 410) in the hardware rules processor (302), scheduled by the hardware rules processor scheduler (404) to receive the header from the hardware rules processor scheduler (404), the hardware rules processor core (406, 408, 410) being configured to read (506) compiled networking policies from a memory (604) (412), based on receipt of the header, and to apply (508) the compiled networking policies to the header to yield a modified header for the data packet; and
a connection establishment processor (418) in the hardware rules processor (302) and configured to record (510) the networking connection for the data packet based on the modified header in an established connection datastore (308).

9. The hardware rules processor of claim 8, wherein the compiled networking policies are provided by a software-defined networking controller external to the hardware rules processor and include match conditions and corresponding actions.

10. The hardware rules processor of one of claims 8 or 9, wherein the connection establishment processor is further configured to record the networking connection for the data packet by determining one or more differences between the modified header and the header to yield one or more delta fields and writing the one or more delta fields to the established connection datastore to establish the networking connection for the data packet.

11. The hardware rules processor of one of claims 8 to 10, wherein the connection establishment processor is further configured to record the networking connection for the data packet by writing connection parameters to the established connection datastore to establish the networking connection for the data packet.

12. The hardware rules processor of one of claims 8 to 11, wherein the connection establishment processor is configured to receive the modified header and the header from the hardware rules processor core.

13. A hardware device (300) for facilitating communication networking in a distributed computing system, the hardware device (300) being configured to communicatively connect to host servers individually supporting a virtual switch (220) and one or more virtual machines, the hardware device (300) comprising:
a memory (604) (412); and
a hardware rules processor (302) including a processor input (402) configured to receive (502) a header of a data packet in the hardware device, based on determination that a networking connection for the data packet had not yet been established in the distributed computing system, wherein the data packet includes a payload and the header with header fields, a hardware rules processor scheduler (404) configured to schedule (504) processing of the header among hardware processing cores (406, 408, 410) in the hardware rules processor (302), a rules processor core scheduled by the hardware rules processor scheduler (404) to receive the header from the hardware rules processor scheduler (404), the rules processor core being configured to read (506) compiled networking policies from the memory (604) (412), based on receipt of the header, and to apply (508) the compiled networking policies to the header to yield a modified header for the data packet by matching one or more of the header fields to a match condition and executing a corresponding action of the compiled networking policies to generate the modified header, and a connection establishment processor (418) configured to record (510) the networking connection for the data packet based on the modified header in an established connection datastore (308).

14. The hardware device of claim 13, wherein the compiled networking policies are provided by a software-defined networking controller external to the hardware device and include match conditions and corresponding actions.

15. The hardware device of claim 13, wherein the connection establishment processor is further configured to determine one or more differences between the modified header and the header to yield one or more delta fields and to write the one or more delta fields to the established connection datastore to establish the networking connection for the data packet,
wherein the connection establishment processor is further configured to write connection parameters to the established connection datastore to establish the networking connection for the data packet, wherein the established connection datastore resides in circuitry in the hardware device, or
further comprising:
packet merger circuitry configured to combine the modified header with the payload of the data packet to yield a modified data packet and to forward the modified data packet in accordance with the modified header, or
wherein the data packet is a first data packet and further comprising:
packet merger circuitry configured to combine the modified header with the payload of the data packet to yield a modified data packet and to forward a modified version of the first data packet in accordance with the networking connection recorded in the established connection datastore, or
wherein the data packet is a first data packet and, based on receipt of a second data packet after the first data packet, the second data packet including a second header sharing common header fields with the header of the first data packet, and further comprising:
a parser and lookup processor configured to determine that the networking connection for the first data packet and the second data packet have been established in the distributed computing system, wherein the networking connection is recorded in the established connection datastore of the hardware device; and
a packet merger configured to forward the second data packet in accordance with the networking connection recording the established connection datastore of the hardware device, or
wherein the connection establishment processor is configured to receive the modified header and the header from the rules processor core.
